(19) Europäisches Patentamt
European Patent Office
Office européen des brevets

(11) EP 1 203 936 B1

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(51) Int Cl.:
***G01K 11/24*** *(2006.01)*

(21) Anmeldenummer: **00124055.5**

(22) Anmeldetag: **06.11.2000**

(54) **Vorrichtung zum Erfassen der Raumtemperatur mit Hilfe von Schallwellen**

Device for evaluating, with acoustic waves, the temperature of a room

Dispositif pour mesurer, par ondes acoustiques, la température d'un habitacle

(84) Benannte Vertragsstaaten:
**AT BE CH CY DE DK ES FI FR GB GR IE IT LI LU MC NL PT SE TR**

(43) Veröffentlichungstag der Anmeldung:
**08.05.2002 Patentblatt 2002/19**

(73) Patentinhaber: **SIEMENS AKTIENGESELLSCHAFT**
**80333 München (DE)**

(72) Erfinder: **Lüthi, Yves**
**6330 Cham (CH)**

(56) Entgegenhaltungen:
**EP-A- 1 014 061 DE-A- 1 943 846**

- **VIROVLYANSKII A L ET AL: "RECONSTRUCTION OF THE MEAN TEMPERATURE IN A WATER LAYER FROM THE ARRIVAL TIMES OF QUARTETS OF RAYS: ACCURACY ESTIMATIONS" ACOUSTICAL PHYSICS,US, AMERICAN INSTITUTE OF PHYSICS. NEW YORK, Bd. 44, Nr. 1, 1998, Seiten 29-34, XP000733714 ISSN: 1063-7710**
- **PATENT ABSTRACTS OF JAPAN vol. 009, no. 101 (P-353), 2. Mai 1985 (1985-05-02) -& JP 59 226842 A (FURUNO DENKI KK), 20. Dezember 1984 (1984-12-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf eine Vorrichtung, zum Erfassen der Temperatur eines Raums. .

Solche Vorrichtungen und Verfahren werden vorteilhaft in Gebäuden zur Erfassung einer mittleren Temperatur in einem Raum verwendet.

Es ist eine Vorrichtung zur Erfassung der Temperatur mittels Schallwellen bekannt (US 5,349,859), bei der die Schallgeschwindigkeit in einem Fluid erfasst und daraus die Temperatur des Fluids berechnet wird.

Es ist auch bekannt (US 4,031,756), mit Hilfe von Ultraschallwellen die Strömungsgeschwindigkeit von Luft zu erfassen und die Temperatur der Luft zu berechnen.

In den bekannten Vorrichtungen und Verfahren zur Erfassung der Temperatur mit Hilfe von Schall- oder Ultraschallwellen wird vorausgesetzt, dass der Weg, den die Schall-oder Ultraschallwellen in der Messvorrichtung zurücklegen, genau bekannt ist.

Die Ausdrücke Schall oder Schallwelle ohne weitere Angaben bedeuten im Folgenden allgemein Schallwellen in den Frequenzbereichen Hörschall (16 Hz $\leq$ f $\leq$ 16 kHz) oder Ultraschall (f > 16 kHz).

Der Erfindung liegt die Aufgabe zugrunde, eine Vorrichtung und ein Verfahren zum Erfassen der Temperatur eines Raumes mit Hilfe von Schallwellen anzugeben, welche auch dann einsetzbar sind, wenn die Abmessungen des Raumes nicht bekannt sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1 eine Vorrichtung zum Erfassen der Temperatur eines Raumes mit Hilfe von Schallwellen, welche in einem gewissen Abstand x reflektiert werden,

Fig. 2 eine Anlage zur Regelung und/oder Steuerung von Raumklimagrössen, und

Fig. 3 ein Ablaufdiagramm zu einem Verfahren zum Kalibrieren eines Wertes für den Abstand x.

In der Fig. 1 bedeutet 1 eine Vorrichtung zur Erfassung der Temperatur eines Raumes 2. Die Vorrichtung 1 weist einen über eine Treibereinheit 3 ansteuerbaren Schallwandler 4 und eine Zeitgebereinheit 5 auf. In der Vorrichtung 1 sind mit Vorteil ein Temperaturfühler 6 und ein Feuchtefühler 7 angeordnet. Die Vorrichtung 1 umfasst auch einen ersten Speicherplatz 8 für eine Variable x und einen zweiten Speicherplatz 9 für eine weitere Variable U. Mit Vorteil weist die Vorrichtung 1 wenigstens einen Prozessor 10 auf.

Der Temperaturfühler 6 ist mit Vorteil eine kostengünstige Ausführung, beispielsweise ein Nickelfühler.

In einem gewissen Abstand x vom Schallwandler 4 aus ist der Raum 2 durch ein Schallwellen reflektierendes Hindernis 20 begrenzt. Das Hindernis 20 ist beispielsweise eine Wand, eine Säule, ein Möbel oder ein Reflektor.

Vom Schallwandler 4 generierte Schallwellen durchlaufen den Raum 2 über den Abstand x und treffen auf das Hindernis 20, welches die Schallwellen wenigstens teilweise reflektiert, so dass die reflektierten Schallwellen über den Abstand x zum Schallwandler 4 zurücklaufen und im Schallwandler 4 in elektrische Signale umwandelbar sind.

Die Treibereinheit 3 dient der Bedienung des Schallwandlers 4 und liefert einerseits elektrische Signale zum Ansteuern des Schallwandlers 4. Andrerseits werden die vom Schallwandler 4 generierten elektrischen Signale durch die Treibereinheit 3 den Anforderungen der Zeitgebereinheit 5 angepasst an diese weitergeleitet.

Durch die Zeitgebereinheit 5 werden die Ansteuerung des Schallwandlers 4 und die Auswertung der vom Schallwandler 4 generierten elektrischen Signale zeitlich derart aufeinander abgestimmt und veranlasst, dass die Laufzeit t ermittelt werden kann, welche die Schallwellen zum Durchlaufen des Abstands x benötigen.

Bei Bedarf umfasst die Zeitgebereinheit 5 einen zusätzlichen Prozessor oder Mikrocomputer oder Zeitgebereinheit 5 und der Prozessor 10 werden als hochintegrierter Einzelbaustein verwirklicht.

In der Fig. 2 bedeutet 30 eine Anlage zur Regelung und/oder Steuerung von Raumklimagrössen des Raumes 2. Die Anlage 30 weist wenigstens ein Regelgerät 31, ein Stellglied 32 und die Vorrichtung 1 zur Erfassung der Temperatur des Raumes 2 auf. Das Regelgerät 31, das Stellglied 32 und die Vorrichtung 1 weisen je eine Schnittstelleneinheit 33 bzw. 34 bzw. 35 auf, welche mit einem Kommunikationsmedium 40 verbunden ist. Über das Kommunikationsmedium 40 sind Prozessgrössen - beispielsweise Raumklimawerte oder Stellsignale - zwischen den Teilnehmerstationen, nämlich der Vorrichtung 1, dem Regelgerät 31 und dem Stellgerät 32 austauschbar. Das Kommunikationsmedium 40 ist eine verdrahtete - oder eine drahtlose Verbindungseinrichtung. In der Fig. 2 ist typischerweise ein Teil eines Gebäudeleitsystems dargestellt.

Es versteht sich von selbst, dass die Vorrichtung 1 und das Regelgerät 31 bei Bedarf auch in einer einzigen Baugruppe verwirklichbar sind.

Grundlagen über die Ausbreitung von Schallwellen sind allgemein bekannt, beispielsweise auch aus V. Sutilov, Physik des Ultraschalls, Springerverlag, 1984. Für Luft bei einer Temperatur von 0 °C beträgt die Schallgeschwindigkeit $c_0$ 332 $ms^{-1}$. Die Schallgeschwindigkeit in Luft ist von der Feuchte und der Temperatur abhängig.

Für die weitere Beschreibung der Funktionsweise der Vorrichtung 1 (Fig. 1) werden folgende, teilweise oben schon eingeführte Symbole benutzt:

- x für den Abstand zwischen dem Schallwandler 4 und dem Hindernis 20;
- t Laufzeit der Schallwellen über den Weg x;
- $c_0$ Schallgeschwindigkeit in Luft bei einer Temperatur von 0 °C, $c_0$ = 331,65 m/s;
- $T_L$ Temperatur der Luft;
- a erste Konstante, $a=1{,}75 \cdot 10^{-3}$ °C
- b zweite Konstante, $b=3{,}35 \cdot 10^{-5}$
- H relative Feuchte der Luft

Die Schallgeschwindigkeit x/t kann vorteilhaft durch folgende Gleichung ausgedrückt werden:

$$\frac{x}{t} = c_0 \cdot (1 + a \cdot T_L) \cdot (1 + b \cdot H) \qquad \text{[ Gleichung 1 ]}$$

Die Temperatur der Luft errechnet sich aus Gleichung 1, gemäss

$$T_L = \frac{x}{t \cdot a \cdot c_0 \cdot (1 + b \cdot H)} - \frac{1}{a} \qquad \text{[ Gleichung 2 ]}$$

Die Temperatur der Luft ist durch den Prozessor 10 nach Gleichung 2 berechenbar, sofern die Laufzeit t der Schallwellen durch die Zeitgebereinheit 5 ermittelt und auch die relative Feuchte der Luft mit dem Feuchtefühler 7 gemessen wird.

Die Benutzung der Gleichung 2 setzt jedoch voraus, dass der Abstand x bekannt ist. Tatsächlich könnte der Abstand x bei der Installation der Vorrichtung 1 genau gemessen und als Parameter eingegeben werden. Ein derartiges Vorgehen bringt den Nachteil, dass nach Änderungen der Geometrie des Raumes 2 der Abstand neu zu vermessen und einzugeben wäre. Wenn der Raum 2 beispielsweise über Trennwände verfügt, welche je nach aktueller Nutzung des Raums 2 umgestellt werden, ist die manuelle Eingabe des Abstands x jedoch unzuverlässig.

Mit Vorteil wird der Abstand x durch die Vorrichtung 1 selbsttätig ermittelt. Je nach Geometrie des Raumes 2 kann der Abstand x mehrere Meter bis zu einem Vielfachen von 10 Metern umfassen.

In einem vorteilhaften Verfahren zur Ermittelung des Abstands x wird durch die Vorrichtung 1 ein Parameter eingelesen und daraus ein Schätzwert für den Abstand x berechnet. In einem Näherungsverfahren wird der Schätzwert für den Abstand x wiederholt verbessert.

In einem vorteilhaften Ausführungsbeispiel der Vorrichtung 1 ist der Parameter zur Berechnung des Schätzwertes die Raumtemperatur T, welche vom Temperaturfühler 6 erfasst wird.

Mit der Einführung einer von der Laufzeit t der Schallwellen und der relativen Feuchte H abhängigen Funktion A(t,H) und einer dritten Konstante B kann die Gleichung 2 - oder allgemein eine Gleichung für die Temperatur der Luft - wie folgt dargestellt werden:

$$T_L = x \bullet A(t, H) - B \qquad \text{[ Gleichung 3 ]}$$

oder nach dem Abstand x aufgelöst:

$$x = \frac{T_L + B}{A(t,H)} \qquad \text{[ Gleichung 4 ]}$$

In einem vorteilhaften Näherungsverfahren wird für diskrete Zeitpunkte j wiederholt ein verbesserter Schätzwert für den Abstand x ermittelt und nachher unter Verwendung des verbesserten Schätzwertes ein Raumtemperaturwert für den Zeitpunkt j berechnet.

In der Fig. 3 ist mit 50 eine beispielhafte Initialisierungsprozedur und mit 51 eine beispielhafte Berechnungsprozedur bezeichnet, wobei die Initialisierungsprozedur 50 wie auch die Berechnungsprozedur 51 grundsätzlich - als Schleife - wiederholbar verwirklicht sind und vom Prozessor 10 ausgeführt werden. In der Berechnungsprozedur 51 wird einerseits ein Wert für den Abstand x kalibriert und andrerseits ein Wert U für die Temperatur des Raumes 2-berechnet.

Grundsätzlich könnte die Kalibrierung auch abgebrochen werden, wenn sich die berechneten Werte für den Abstand x nicht mehr ändern und die Geometrie des Raumes 2, das heisst die Position des Hindernisses 20 unverändert bleibt.

In der Initialisierungsprozedur 50 wird in einem ersten Initialisierungsschritt 52 für den entsprechenden Zeitpunkt eine Laufvariable j auf 1 gesetzt. In einem zweiten Initialisierungsschritt 53 wird ein Parameter zur Ermittlung eines ersten Schätzwertes eingelesen. Mit Vorteil ist der Parameter die vom Temperaturfühler 6 gemessene Raumtemperatur $T_j$. In einem dritten Initialisierungsschritt 54 wird der erste Schätzwert $x_j$ für den Abstand x nach der Gleichung 4 berechnet, wobei in der Gleichung 4 für die Lufttemperatur $T_L$ die Raumtemperatur $T_j$ eingesetzt wird. In einem vierten Initialisierungsschritt 55 wird ein Mittelwert $\overline{x}_j$ für den Schätzwert $x_j$ mit Vorteil mit dem ersten Schätzwert $x_j$ selbst initialisiert. Mit Vorteil wird der Mittelwert $\overline{x}_j$ im ersten Speicherplatz 8 (Fig. 1) abgelegt. Schliesslich wird in einem fünften Initialisierungsschritt 56 eine Variable $U_j$ mit der Raumtemperatur $T_j$ initialisiert. Die Variable $U_j$ ist der zweite Speicherplatz 9 (Fig. 1) für die mit Hilfe von Schallwellen ermittelte Temperatur des Raumes 2.

In der Berechnungsprozedur 51 wird in einem ersten Schleifenschritt 61 die Laufvariable j aktualisiert, wobei normalerweise die Laufvariable j um eins erhöht wird. In einem zweiten Schleifenschritt 62 wird vorteilhafterweise der Parameter zur Ermittlung eines Schätzwertes neu eingelesen. Beispielhaft ist der Parameter die vom Temperaturfühler 6 im Zeitpunkt j gemessene Raumtemperatur $T_j$. In einem dritten Schleifenschritt 63 wird der Schätzwert $x_j$ für den Abstand x nach der Gleichung 4 neu berechnet, wobei in der Gleichung 4 für die Lufttemperatur $T_L$ mit Vorteil die gemessene Raumtemperatur $T_j$ eingesetzt wird.

In einem vierten Schleifenschritt 64 wird der Mittelwert $\overline{x}_j$ verbessert, wobei beispielhaft aus dem vorgängigen Mittelwert $\overline{x}_{j-1}$ und dem aktuellen Schätzwert $x_j$ der Mittelwert $\overline{x}_j$ durch Bildung des arithmetischen Mittels neu berechnet wird. Es versteht sich von selbst, dass in gewissen Fällen vorteilhafterweise ein neuer Mittelwert auf andere Art, beispielsweise durch Bildung des geometrischen Mittels oder unter Vernachlässigung von stark abweichenden Werten gebildet werden kann.

Die in der Fig. 3 vorgeschlagene Mittelwertbildung gemäss der Formel

$$\overline{x}_j := ((j-1) \cdot \overline{x}_{j-1} + x_j) / j \qquad \text{[ Formel 5 ]}$$

ist besonders einfach, da jeweils nur ein einzelner vorgängig errechneter Mittelwert $\overline{x}_{j-1}$ im Speicher verfügbar sein muss.

Schliesslich wird in einem fünften Schleifenschritt 65 der Wert der Variable $U_j$ aktualisiert, wobei mit Vorteil die Gleichung 3 angewendet wird. Mit der Variablen $U_j$ anstelle von $T_L$ und dem Mittelwert $\overline{x}_j$ anstelle des Abstands x ergibt sich aus der Gleichung 3 der fünfte Schleifenschritt 65 mit:

$$U_j := \overline{x}_j \cdot A_j(t_j, H_j) - B \qquad \text{[ Formel 6 ]}$$

Am Schluss der Berechnungsprozedur 51 - beziehungsweise zu Beginn - wird vorteilhafterweise in einem Test 70 ermittelt, ob die Initialisierungsprozedur 50 erneut zu durchzuführen ist, oder ob die Berechnungsprozedur 51 wiederholt werden soll.

Mit Vorteil wird die Initialisierungsprozedur 50 dann durchgeführt, wenn der Wert der Variablen x unerwartet sprunghaft ändert.

Die mit Hilfe von Schallwellen ermittelte und in der Variablen U gespeicherte Temperatur des Raumes 2 ist eine mittlere Raumtemperatur. Dadurch, dass die temperaturabhängige Ausbreitung der Schallwellen im Raum 2 zur Messung der Raumtemperatur ausgenutzt wird, steht ein Temperaturwert U zur Verfügung, der als Istwert zur Regelung und/oder Steuerung von Raumklimagrössen ideal ist. Durch eine günstige Platzierung der Vorrichtung 1 im Raum 2 derart, dass ein Pfad mit dem Abstand x durch einen für die Temperaturbestimmung relevanten Bereich des Raumes 2 führt, ist ein verbesserter Raumkomfort erreichbar. Im Gegensatz dazu liefert ein Temperaturfühler in der Form eines Nickelwiderstandes oder eines Thermoelements immer nur die Temperatur eines Raumpunktes, der ausserdem thermisch mehr oder weniger mit der Wand gekoppelt ist, an welcher der Temperaturfühler angeordnet ist.

Es versteht sich von selbst, dass die Frequenz der eingesetzten Schallwellen im Bereich des Ultraschalls gewählt wird, wenn der Raum 2 ein Wohn- oder Arbeitsraum ist.

Die Frequenz der praktisch einsetzbaren Schallwellen ist nach unten bei etwa 40 kHz begrenzt, da bei tieferen Frequenzen die ersten Harmonischen f/2 in den Hörbereich fallen. Nach oben ergibt sich die Grenze bei etwa 80 kHz, da sich bei höheren Frequenzen die Absorption durch die Luft zu stark auswirkt. Bei einer Schallfrequenz im Bereich von 40 kHz bis 60 kHz ist der überwindbare Abstand x auch für einen relativ grossen Raum 2 genügend.

## Patentansprüche

1. Vorrichtung zum Erfassen der Temperatur eines Raums (2),

   - mit Mitteln (4) zum Generieren und Empfangen von Schallwellen,
   - mit Mitteln (5) zum Bestimmen der Laufzeit der Schallwellen für eine gewisse Strecke (x) im Raum (2),
   - mit einem Feuchtefühler (7) zur Erfassung der Feuchte des Raums (2), und
   - mit Mitteln (10) zur Berechnung der Temperatur (U) des Raums (2) mit Hilfe der erfassten Feuchte des Raums (2) und der ermittelten Laufzeit (t) der Schallwellen für die Strecke (x) im Raum, wobei

   Mittel (10, 6) zur selbsttätigen Durchführung eines Näherungsverfahrens zur Ermittlung der Strecke (x) vorgesehen sind, wobei im Näherungsverfahren ein Schätzwert für die Strecke (x) wiederholt verbessert wird.

2. Vorrichtung nach Anspruch 1, **gekennzeichnet durch** ein Mittel (6) zur Erfassung eines Parameters, **durch** den der Schätzwert für die Strecke (x) selbsttätig berechenbar ist.

3. Vorrichtung nach Anspruch 2, **gekennzeichnet durch** einen Temperatursensor (6), mit dem eine Raumtemperatur ($T_j$) zur Berechnung des Schätzwertes für die Strecke (x) erfassbar ist.

4. Vorrichtung nach einem der vorangehenden Ansprüche 2 oder 3, **dadurch gekennzeichnet, dass** im Näherungsverfahren wiederholt ein neuer Mittelwert ($\bar{x}_j$) berechenbar ist, wobei der neue Mittelwert ($\bar{x}_j$) aus einem vorgängig berechneten Mittelwert ($\bar{x}_{j-1}$) und dem erfassten Parameter ($T_j$) berechnet wird.

5. Anlage (30) zur Regelung und/oder Steuerung von Raumklimagrössen, **gekennzeichnet durch** eine Vorrichtung (1) nach einem der Ansprüche 1 bis 4.

## Claims

1. Apparatus for detecting the temperature of a room (2),

   - having means (4) for generating and receiving sound waves,
   - having means (5) for determining the transit time of the sound waves for a certain distance (x) in the room (2),
   - having a humidity sensor (7) for detecting the humidity of the room (2) and
   - having means (10) for calculating the temperature (U) of the room (2) with the aid of the detected humidity of the room (2) and the ascertained transit time (t) of the sound waves for the distance (x) in the room (2), wherein

   means (10, 6) are provided for automatically carrying out an approximation procedure for ascertaining the distance (x), an estimation value for the distance (x) being repeatedly improved in the approximation procedure.

2. Apparatus according to claim 1, **characterised by** a means (6) for detecting a parameter by means of which the estimation value for the distance (x) can be automatically calculated.

**3.** Apparatus according to claim 2, **characterised by** a temperature sensor (6) with which a room temperature ($T_j$) for calculating the estimation value for the distance (x) can be detected.

**4.** Apparatus according to one of the preceding claims 2 or 3, **characterised in that** in the approximation procedure a new mean value ( $\bar{x}_j$) can be calculated repeatedly, the new mean value ( $\bar{x}_j$) being calculated from a previously calculated mean value ( $\bar{x}_{j-1}$) and the detected parameter ($T_j$).

**5.** Installation (30) for regulating and/or controlling room climate variables, **characterised by** an apparatus (1) according to one of claims 1 to 4.

## Revendications

**1.** Dispositif pour enregistrer la température d'un espace (2),

- comprenant des moyens (4) pour générer et recevoir des ondes acoustiques,
- des moyens (5) pour déterminer le temps de parcours des ondes acoustiques pour un certain tronçon (x) dans l'espace (2),
- un capteur d'humidité (7) pour l'enregistrement de l'humidité de l'espace (2), et
- des moyens (10) pour le calcul de la température (U) de l'espace (2) à l'aide de l'humidité enregistrée de l'espace (2) et du temps de parcours (t) déterminé des ondes acoustiques pour le tronçon (x) dans l'espace,

des moyens (10, 6) étant prévus pour la mise en oeuvre automatique d'un procédé d'approximation pour la détermination du tronçon (x), une valeur estimée pour le tronçon (x) étant améliorée de façon répétée dans le procédé d'approximation.

**2.** Dispositif selon la revendication 1, **caractérisé par** un moyen (6) pour l'enregistrement d'un paramètre, par lequel la valeur estimée pour le tronçon (x) peut être calculée automatiquement.

**3.** Dispositif selon la revendication 2, **caractérisé par** un capteur de température (6), qui permet d'enregistrer une température ambiante ($T_j$) pour le calcul de la valeur estimée pour le tronçon (x).

**4.** Dispositif selon l'une quelconque des revendications précédentes 2 ou 3, **caractérisé en ce qu'**une nouvelle valeur moyenne ($\bar{x}_j$) peut être calculée de façon répétée dans le procédé d'approximation, la nouvelle valeur moyenne ($\bar{x}_j$) étant calculée à partir d'une valeur moyenne ($\bar{x}_{j-1}$) calculée auparavant et du paramètre ($T_j$) enregistré.

**5.** Appareil (30) pour le réglage et/ou la commande de grandeurs de climat ambiant, **caractérisé par** un dispositif (1) selon l'une quelconque des revendications 1 à 4.

Fig. 1

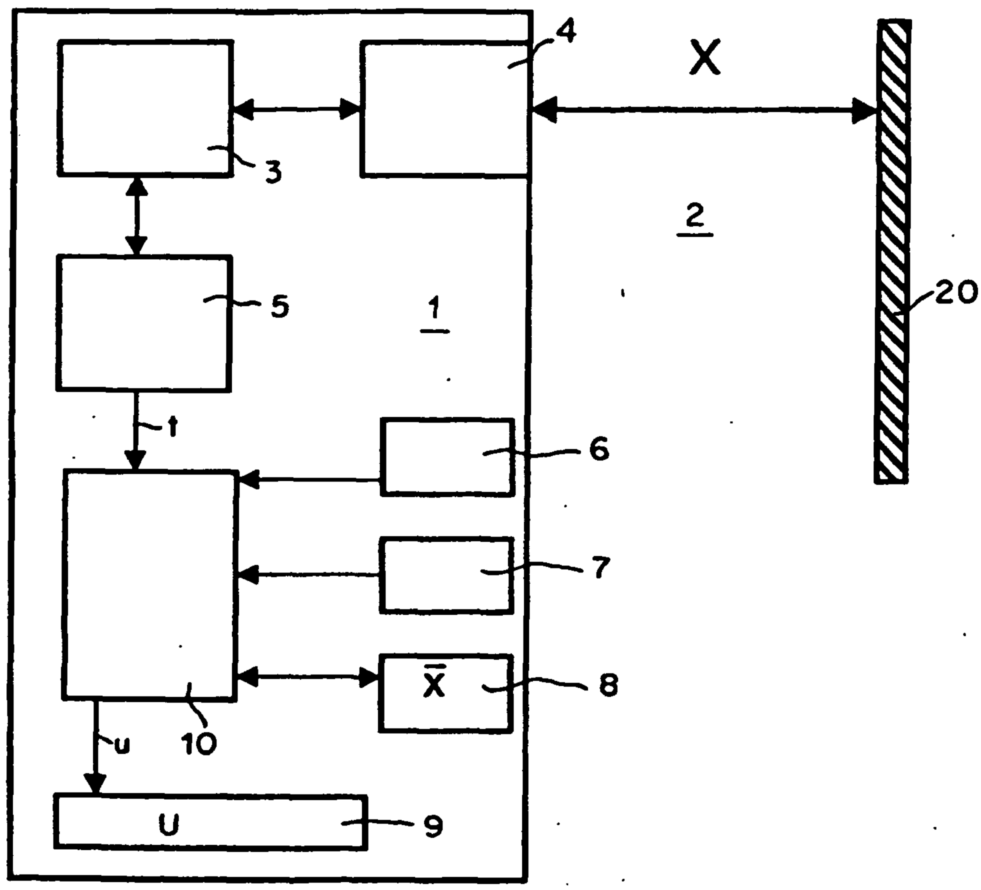

Fig. 2

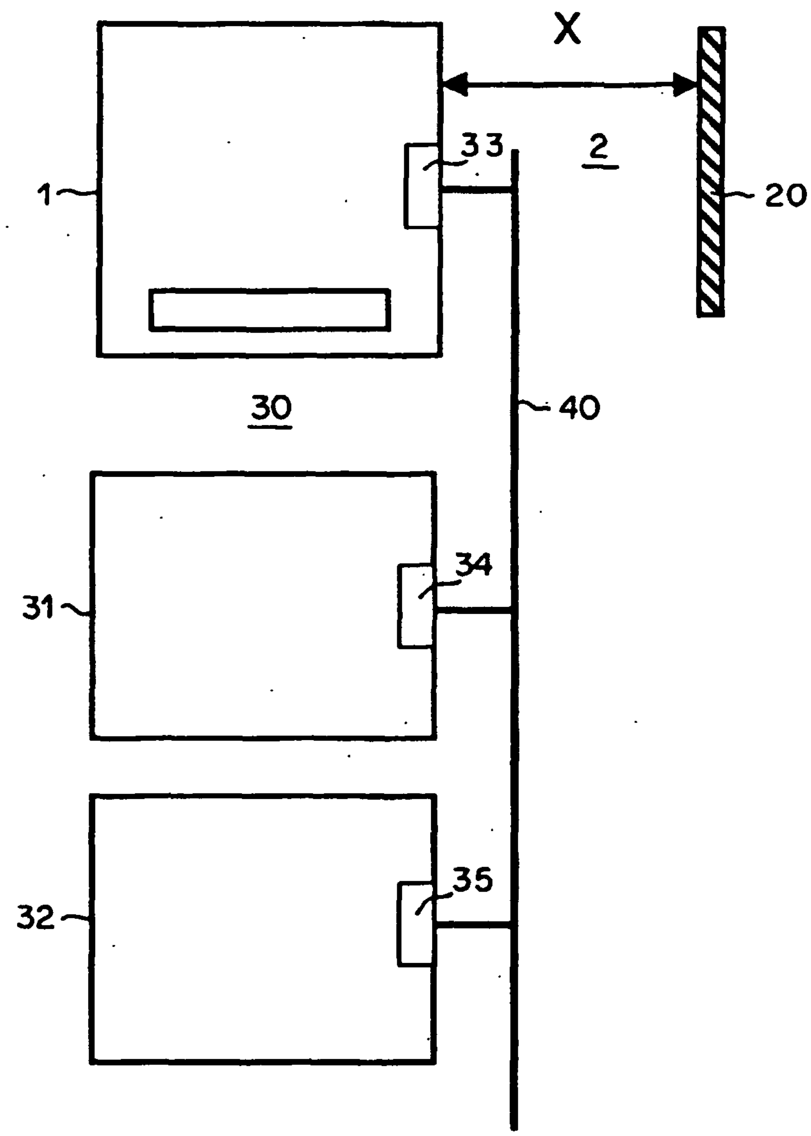

Fig.3

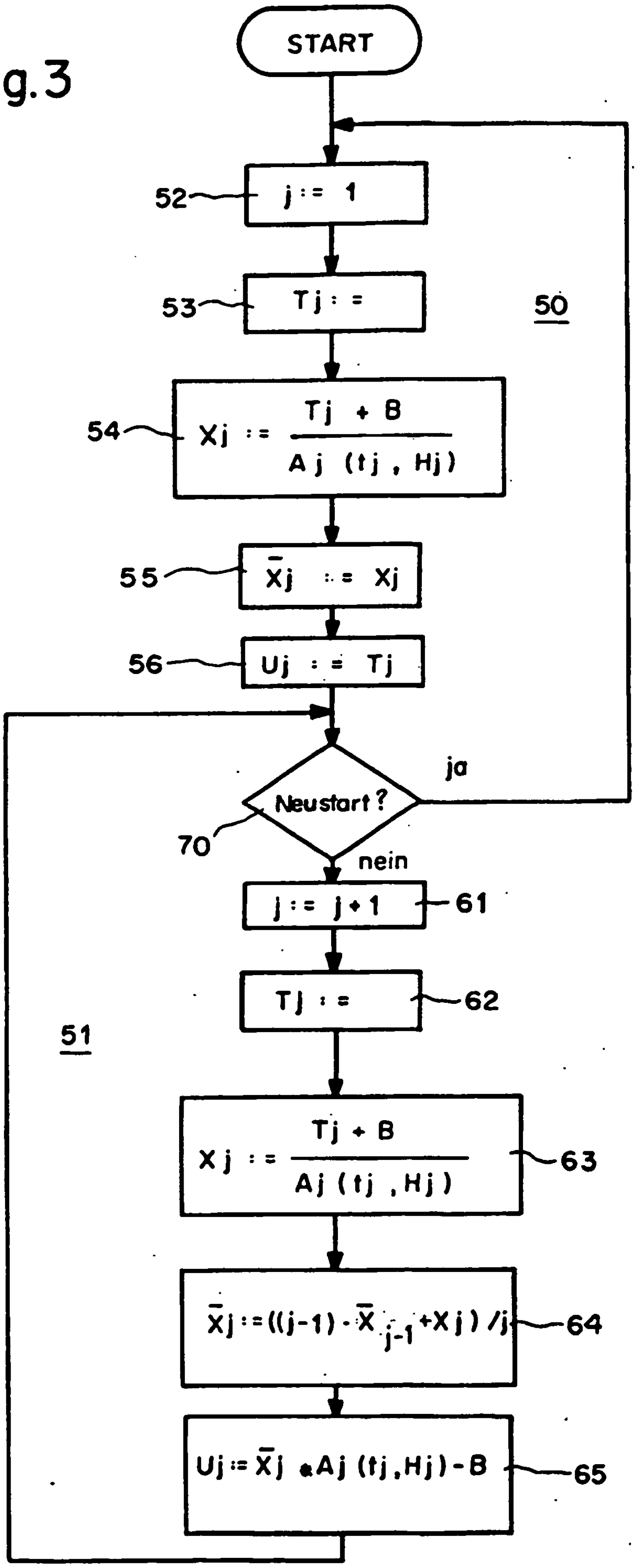
START
52
j := 1
53
Tj :=
50
54
Xj := (Tj + B) / Aj (tj , Hj)
55
X̄j := Xj
56
Uj := Tj
ja
Neustart ?
70
nein
j := j+1
61
Tj :=
62
51
Xj := (Tj + B) / Aj (tj ,Hj)
63
X̄j := ((j-1) · X̄ j-1 +Xj) /j
64
Uj := X̄j * Aj (tj,Hj) - B
65

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5349859 A
- US 4031756 A